# EUROPÄISCHE PATENTSCHRIFT

(11) **EP 2 367 639 B1**
(45) Veröffentlichungstag und Bekanntmachung des Hinweises auf die Patenterteilung: **26.08.2015**
(21) Anmeldenummer: 09767972.4
(22) Anmeldetag: 02.12.2009
(51) Int. Cl.: B05D 5/06, C09D 5/20, B05D 7/00

(54) **VERFAHREN ZUM AUFBRINGEN EINER LACKFOLIE ALS FLÜSSIGFOLIE**
METHOD FOR APPLYING A FILM OF PAINT AS A LIQUID FILM
PROCÉDÉ POUR L'APPLICATION D'UN FILM DE PEINTURE SOUS FORME DE FILM LIQUIDE

(30) Priorität: 19.12.2008 DE 102008063984
(43) Veröffentlichungstag der Anmeldung: 28.09.2011
(73) Patentinhaber: Dürr Systems GmbH, 74321 Bietigheim-Bissingen (DE)
(72) Erfinder: WESSELKY, Steffen, 73099 Adelberg (DE); BEYL, Timo, 74354 Besigheim (DE); FRITZ, Hans-Georg, 73760 Ostfildern (DE)
(74) Vertreter: Kotitschke, Bernd
(86) Internationale Anmeldenummer: PCT/EP2009/008602
(87) Internationale Veröffentlichungsnummer: WO 2010/069467

(56) Entgegenhaltungen:
- EP-A1- 0 849 298
- EP-A1- 0 970 811
- EP-A1- 1 213 308
- EP-A1- 1 889 666
- EP-A2- 1 043 174
- DE-A1- 4 110 098
- DE-A1- 19 517 067
- DE-A1- 19 652 728
- DE-A1- 19 854 760
- DE-A1-102005 051 126
- US-A- 5 009 600

## Beschreibung

Die Erfindung betrifft ein Verfahren zur Beschichtung einer Bauteiloberfläche mit einer zusammenhängenden und wieder abziehbaren Lackfolie, insbesondere zur Beschichtung eines Kraftfahrzeugkarosseriebauteils.

Weiterhin betrifft die Erfindung ein entsprechend beschichtetes Bauteil, insbesondere ein Kraftfahrzeugkarosseriebauteil.

Kraftfahrzeuge werden zu Werbe-, Präsentations- und Individualisierungszwecken oftmals mit einem Dekor in Form von Grafiken, Logos und Schriftzügen versehen. Hierzu werden herkömmlicherweise Lackfolien hergestellt, die beispielsweise auf digitalen Flachbettdruckern mit dem gewünschten grafischen Muster ausgedruckt werden können und dann auf das Kraftfahrzeug aufgeklebt werden. Derartige Lackfolien bieten den Vorteil, dass sie vor einem Wiederverkauf des jeweiligen Kraftfahrzeugs einfach abgezogen werden können.

Nachteilig an derartigen Lackfolien ist jedoch der hohe Arbeitsaufwand beim Bekleben der einzelnen Kraftfahrzeuge, wobei für einen kompletten Personenkraftwagen (PKW) ca. 2-5 Arbeitstage anfallen. So erfolgt das Aufkleben der Lackfolien herkömmlicherweise ausschließlich manuell und erfordert eine gewisse Erfahrung, um Luftblasen und Falten zu verhindern.

DE 41 10 098 A1 offenbart ein Lacksystem und ein Verfahren zum Erzeugen von folienartig abziehbaren, filmförmigen Beschichtungen aus polymerkettenverknüpften Polymer-Doppelschichten. Ferner ist zum Stand der Technik hinzuweisen auf DE 199 16 062 A1, DE 196 53 585 A1, DE 601 09 954 T2, DE 10 2005 051 126 A1, DE 198 54 760 C2 und DE 10 2006 038 562 A1.

Der Erfindung liegt deshalb zunächst allgemein die Aufgabe zugrunde, das vorstehend beschriebene bekannte Verfahren zum Aufbringen der Lackfolien entsprechend zu verbessern.

Diese Aufgabe wird durch ein erfindungsgemäßes Verfahren gemäß dem Hauptanspruch gelöst. Weiterhin wird diese Aufgabe durch ein entsprechend beschichtetes Bauteil gemäß dem Nebenanspruch gelöst.

Die Erfindung umfasst die allgemeine technische Lehre, die Lackfolie als Flüssigfolie auf die jeweilige Bauteiloberfläche aufzusprühen, wodurch der Arbeitsaufwand zum Aufbringen der Lackfolie wesentlich verringert werden kann.

Derartige Flüssigfolien sind an sich aus dem Stand der Technik bekannt und beispielsweise in DE 196 21 037 A1, DE 196 52 728 A1 und DE 100 60 673 A1 beschrieben. In dem vorstehend zitierten Stand der Technik dienen die Flüssigfolien jedoch nicht als Lackfolien mit einer entsprechenden Oberflächenqualität, sondern als Schutzfolie zum Oberflächenschutz von Kraftfahrzeugen während Transport und Lagerung. Die erfindungsgemäße Lackfolie unterscheidet sich deshalb von den herkömmlichen Schutzfolien durch eine gute Oberflächenqualität, die einem Kraftfahrzeuglack entspricht.

Der im Rahmen der Erfindung verwendete Begriff einer Folie stellt also vorzugsweise auf eine Schicht oder Beschichtung ab, die durch Trocknen und Verfilmen einer Flüssigfolie, einer Polymer-Dispersion oder einer Polymer-Lösung entsteht. Der im Rahmen der Erfindung verwendete Begriff einer Flüssigfolie ist dagegen vorzugsweise eine Polymer-Lösung oder eine Polymer-Dispersion, die nach dem Trocknen und Verfilmen in einer abziehbare Folie übergeht.

Im einem bevorzugten Ausführungsbeispiel der Erfindung ist die Lackfolie wetterbeständig, was sich durch eine geeignete chemische Zusammensetzung mit den Bestandteilen Polyethylen (PE) und Methylacrylat (Acrylsäuremethylester) erreichen lässt.

Erfindungsgemäß ist die aufgebrachte Lackfolie selbst mehrfarbig und gibt das gewünschte Dekor wieder. Somit wird also beim Aufsprühen der Flüssigfolie das aufgesprühte Beschichtungsmittel entsprechend dem gewünschten Dekor ortsabhängig eingefärbt. Dies bedeutet, dass die Flüssigfolie unterschiedlich eingefärbt ist, um im Gebrauchszustand das gewünschte Dekor (z.B. einen Schriftzug oder eine Werbegrafik) wiederzugeben. Die Einfärbung der Flüssigfolie kann hierbei mit beliebigen Farben erfolgen, jedoch werden vorzugsweise die Grundfarben Cyan, Magenta, Gelb (Yellow) und Schwarz (Key) des CMYK-Farbsystems verwendet, die mit Weiß kombiniert werden können.

Hierbei besteht auch die Möglichkeit, dass nacheinander mehrere Flüssigfolien aufgebracht werden, die dann übereinander liegen. Die einzelnen Flüssigfolien können dabei unterschiedlich eingefärbt sein, um beispielsweise ein mehrfarbiges Dekor wiederzugeben.

In einer anderen Variante der Erfindung dient die als Flüssigfolie aufgesprühte Lackfolie dagegen lediglich als Untergrund für das gewünschte Dekor. Die Lackfolie ist deshalb in dieser Variante einfarbig (vorzugsweise weiß) oder sogar durchsichtig und wird nach dem Aufbringen auf die Bauteiloberfläche mit dem gewünschten Dekor beschichtet.

Weiterhin ist es im Rahmen der Erfindung möglich, wenn die Bauteiloberfläche vor dem Aufsprühen der Lackfolie mit einem Haftvermittler beschichtet wird. Derartige Haftvermittler sind aus dem Stand der Technik bekannt und müssen deshalb nicht näher beschrieben werden. Vorzugsweise wird jedoch auf den Haftvermittler verzichtet, so dass die Lackfolie direkt auf die Bauteiloberfläche aufgebracht wird.

In den beiden vorstehend beschriebenen Varianten besteht zusätzlich die Möglichkeit, dass als oberste Deckschicht ein Klarlack aufgebracht wird, der beispielsweise als Einkomponentenklarlack oder als Zweikomponentenklarlack ausgeführt sein kann.

In einer Variante der Erfindung werden der Haftvermittler, die Lackfolie, das Dekor und/oder der Klarlack mit dem selben Applikationsgerät aufgetragen.

Es besteht jedoch alternativ auch die Möglichkeit, dass der Haftvermittler, die Lackfolie, das Dekor und/oder der Klarlack mit (z.B. drei) unterschiedlichen Applikationsgeräten und/oder nacheinander aufgetragen werden.

Darüber hinaus besteht im Rahmen der Erfindung die Möglichkeit, dass der Haftvermittler und die Lackfolie mit dem selben Applikationsgerät aufgetragen werden, wohingegen das Dekor durch ein anderes Applikationsgerät aufgetragen wird.

Ferner besteht auch die Möglichkeit, dass die Lackfolie und das Dekor mit dem selben Applikationsgerät aufgetragen werden, wohingegen der Haftvermittler zuvor mit einem separaten Applikationsgerät aufgetragen wird.

Weiterhin besteht die Möglichkeit, dass der Haftvermittler, die Lackfolie und das Dekor nacheinander in verschiedenen Arbeitsgängen auf die Bauteiloberfläche aufgetragen werden, wobei in den einzelnen Arbeitsgängen ein Applikationsgerät entlang der Bauteiloberfläche bewegt wird, um die Bauteiloberfläche zu beschichten.

Es besteht jedoch alternativ auch die Möglichkeit, dass der Haftvermittler, die Lackfolie und/oder das Dekor gemeinsam in einem Arbeitsgang auf die Bauteiloberfläche aufgebracht wird.

Darüber hinaus besteht die Möglichkeit, dass zwei Arbeitsgänge vorgesehen sind, wobei in dem ersten Arbeitsgang beispielsweise der Haftvermittler aufgetragen wird, wohingegen in dem zweiten Arbeitsgang dann beispielsweise die Lackfolie und das Dekor aufgetragen wird.

Es besteht jedoch auch die Möglichkeit, dass in dem ersten Gang der Haftvermittler und die Lackfolie aufgetragen wird, wohingegen in dem zweiten Arbeitsgang das Dekor aufgetragen wird.

Vorzugsweise werden die Haftvermittler, die Lackfolie und/oder das Dekor jedoch maschinell aufgebracht, wozu beispielsweise ein mehrachsiger Beschichtungsroboter eingesetzt werden kann, der mehrere schwenkbare Roboterarme aufweist und ein Applikationsgerät zur Aufsprühen der Flüssigfolie über die Bauteiloberfläche führt. Im Gegensatz zu herkömmlichen Lackierrobotern ist der erfindungsgemäße Beschichtungsroboter hierbei so ausgebildet, dass er zum Aufsprühen der Lackfolie als Flüssigfolie geeignet ist.

In einem bevorzugten Ausführungsbeispiel der Erfindung wird deshalb als Applikationsgerät ein Druckkopf eingesetzt, wie er beispielsweise aus der deutschen Patentanmeldung DE 10 2008 053 178.2 bekannt ist, so dass der Inhalt dieser Patentanmeldung der vorliegenden Beschreibung in vollem Umfang zuzurechnen ist, was insbesondere für den Aufbau und die Funktionsweise des Druckkopfs gilt. Vorteilhaft an der Verwendung eines Druckkopfs als Applikationsgerät ist die Eignung des Druckkopfs zum Aufbringen von Grafiken und Schriftzügen mit einer hohen Auflösung.

Vorzugsweise verfügt der Druckkopf über mehrere voneinander getrennte Düsen oder Düsengruppen für die Applikation der verschiedenen Beschichtungsmitteltypen, wie beispielsweise Haftvermittler, Flüssigfolie, Dekor und Klarlack.

Die Erfindung ist jedoch hinsichtlich des verwendeten Applikationsgeräts nicht auf Druckköpfe beschränkt, sondern umfasst auch andere Typen von Applikationsgeräten, wie beispielsweise Rotationszerstäuber, Airless-Geräte, Airmix-Geräte und Ultraschall-Zerstäuber, um nur einige Beispiele zu nennen.

Weiterhin ist zu erwähnen, dass das erfindungsgemäße Verfahren vorzugsweise vorsieht, die Lackfolie nicht nur auf horizontale Bauteiloberflächen (z.B. Hauben und Dächer von Kraftfahrzeugkarosserien) aufzubringen, sondern auch auf geneigte Bauteiloberflächen und insbesondere auf senkrechte Bauteiloberflächen, wie beispielsweise Kotflügel und Türen von Kraftfahrzeugkarosserien. Darüber hinaus eignet sich das erfindungsgemäße Verfahren auch für andere Untergründe, wie beispielsweise lackierte Bauteile, Glas, Polycarbonat-Scheiben und Gummi, um nur einige Beispiele zu nennen. Weiterhin umfasst die Erfindung auch ein entsprechend beschichtetes Bauteil, insbesondere ein Kraftfahrzeugkarosseriebauteil, bei dem eine Lackfolie als Flüssigfolie auf die Bauteiloberfläche aufgesprüht ist. Das erfindungsgemäße Bauteil unterscheidet sich also von den eingangs erwähnten herkömmlichen Bauteilen mit einer aufgeklebten Lackfolie durch die Zusammensetzung der Lackfolie, die bei der Erfindung aus einem Material für eine Flüssigfolie besteht.

Die Lackfolie kann hierbei wahlweise direkt auf die Bauteiloberfläche aufgebracht sein oder auf einen Haftvermittler, der zuvor auf die Bauteiloberfläche aufgebracht wurde.

In einer Variante der Erfindung ist die Lackfolie selbst einfarbig oder durchsichtig und gibt somit kein Dekor wieder. In dieser Variante der Erfindung dient die Lackfolie lediglich als Untergrund für das Dekor, das dann auf die Lackfolie aufgebracht wird.

In einer anderen Variante der Erfindung ist die Lackfolie selbst jedoch mehrfarbig und gibt das gewünschte Dekor wieder.

Vorzugsweise dient hierzu ein mehrachsiger Lackierroboter, der an sich aus dem Stand der Technik bekannt ist und deshalb nicht näher beschrieben werden muss.

Der Lackierroboter führt jedoch anstelle eines herkömmlichen Applikationsgeräts ein Applikationsgerät, das zum Aufsprühen der Lackfolie geeignet ist. Vorzugsweise handelt es sich bei diesem Applikationsgerät um einen Druckkopf, wie er beispielsweise in der deutschen Patentanmeldung DE 10 2008 053 178.2 beschrieben ist, so dass der Inhalt dieser Patentanmeldung hinsichtlich des Aufbaus und der Funktionsweise des Druckkopfs der vorliegenden Beschreibung in vollem Umfang zuzurechnen ist.

In einer Variante der Erfindung führt der Lackierroboter mehrere Applikationsgeräte, nämlich ein erstes Applikationsgerät zur Applikation des Haftvermittlers, ein zweites Applikationsgerät zur Applikation der Lackfolie und/oder ein drittes Applikationsgerät zur Applikation des Dekors auf die Lackfolie.

Es besteht jedoch alternativ auch die Möglichkeit, dass der Lackierroboter lediglich zwei Applikationsgeräte führt, nämlich ein erstes Applikationsgerät zur Applikation beispielsweise des Haftvermittlers und ein zweites Applikationsgerät beispielsweise zur Applikation der Lackfolie und des Dekors.

Ferner ist es auch möglich, dass mehrere Lackierroboter vorgesehen sind, die den Haftvermittler, die Lackfolie, das Dekor bzw. den Klarlack auftragen. Für jeden Beschichtungsmitteltyp (Haftvermittler, Lackfolie, Dekor, Klarlack) kann hierbei also ein separater Lackierroboter vorgesehen sein.

Andere vorteilhafte Weiterbildungen der Erfindung sind in den Unteransprüchen gekennzeichnet oder werden nachstehend zusammen mit der Beschreibung der bevorzugten Ausführungsbeispiele anhand der Figuren näher erläutert. Es zeigen:
- Figur 1: ein bevorzugtes Ausführungsbeispiel des erfindungsgemäßen Verfahrens in Form eines Flussdiagramms,
- Figur 2: eine Abwandlung des Ausführungsbeispiels gemäß Figur 1 in Form eines Flussdiagramms,
- Figur 3: eine Abwandlung des Ausführungsbeispiels gemäß Figur 1 in Form eines Flussdiagramms,
- Figur 4: eine vereinfachte Querschnittsansicht eines Bauteils, das mit einem Haftvermittler, einer Lackfolie und einem Dekor beschichtet ist,
- Figur 5: eine Abwandlung des Ausführungsbeispiels gemäß Figur 4, bei dem die Lackfolie bereits das Dekor beinhaltet,
- Figur 6: eine Abwandlung des Ausführungsbeispiels gemäß Figur 5, bei dem die Lackfolie ohne den Haftvermittler direkt auf das Bauteil aufgebracht ist, sowie
- Figur 7: eine vereinfachte Querschnittsansicht einer erfindungsgemäßen Lackieranlage, die zum Aufbringen der Lackfolie geeignet ist,
- Figur 8: ein weiteres erfindungsgemäßes Ausführungsbeispiel in Form eines Flussdiagramms,
- Figur 9: eine Anwandlung des Ausführungsbeispiels gemäß Figur 2 in Form eines Flussdiagramms,

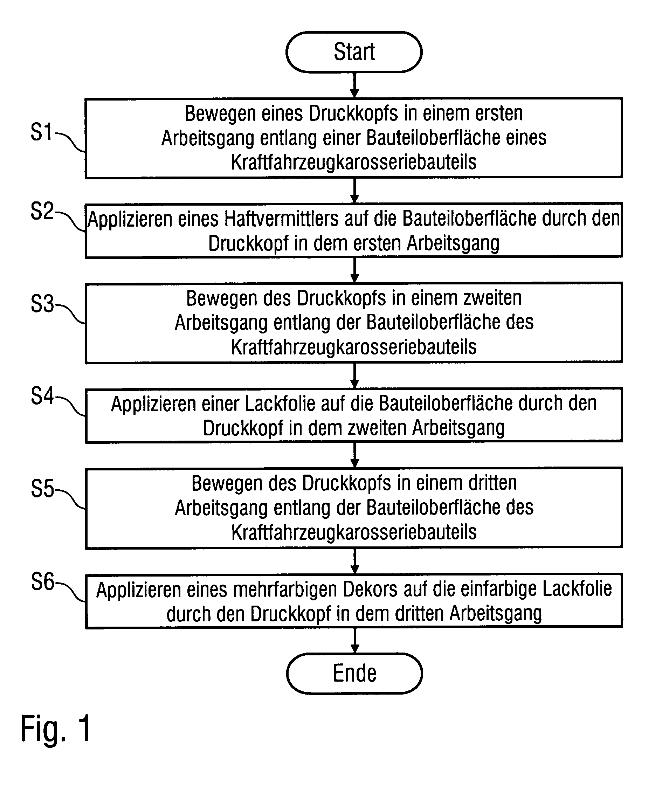

Bei dem erfindungsgemäßen Ausführungsbeispiel gemäß Figur 1 wird in einem ersten Schritt S1 ein Druckkopf in einem ersten Arbeitsgang auf einer vorgegebenen Bewegungsbahn entlang der zu beschichtenden Bauteiloberfläche eines Kraftfahrzeugkarosseriebauteils bewegt.

In dem ersten Arbeitsgang wird dann in einem Schritt S2 ein Haftvermittler auf die Bauteiloberfläche des Kraftfahrzeugkarosseriebauteils aufgesprüht.

Nach der Beschichtung der Bauteiloberfläche des Kraftfahrzeugkarosseriebauteils mit dem Haftvermittler wird der Druckkopf dann in einem Schritt S3 in einem zweiten Arbeitsgang wieder entlang der Bauteiloberfläche des selben Kraftfahrzeugkarosseriebauteils bewegt.

In einem Schritt S4 wird dann in dem zweiten Arbeitsgang die Lackfolie auf den Haftvermittler auf der Bauteiloberfläche aufgesprüht. Die Lackfolie ist hierbei durchsichtig und dient lediglich als Untergrund für das gewünschte Dekor.

Zum Aufbringen des gewünschten Dekors wird der Druckkopf dann in einem weiteren Schritt S5 in einem dritten Arbeitsgang wieder entlang der Bauteiloberfläche des Kraftfahrzeugkarosseriebauteils bewegt.

In einem weiteren Schritt S6 wird dann in diesem dritten Arbeitsgang das gewünschte mehrfarbige Dekor auf die zuvor aufgebrachte Lackfolie appliziert.

Vor einem Wiederverkauf des auf diese Weise beschichten Kraftfahrzeugs kann die als Flüssigfolie aufgebrachte Lackfolie dann einfach wieder von der Bauteiloberfläche abgezogen werden. Dabei wird der Haftvermittler entweder mit abgezogen oder anschließend in herkömmlicher Weise von der Bauteiloberfläche entfernt.

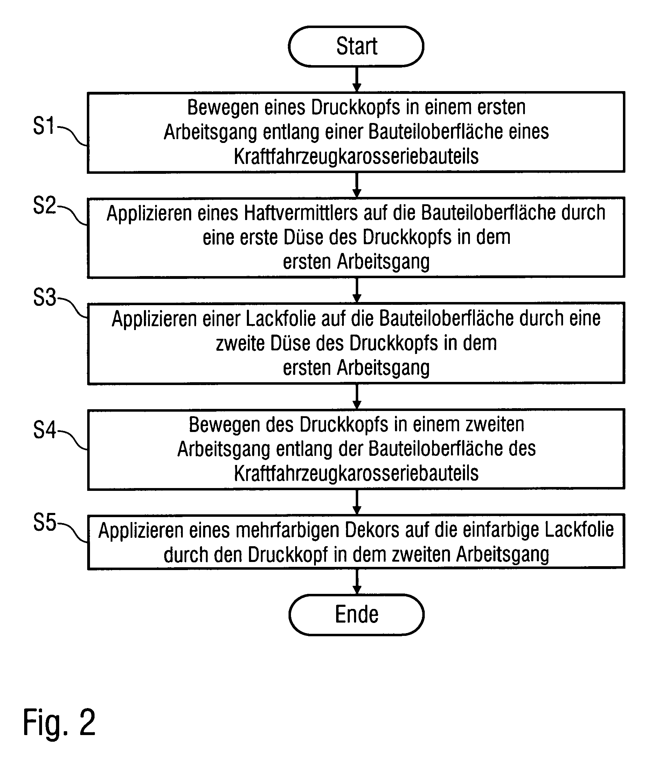

Das Ausführungsbeispiel gemäß Figur 2 stimmt teilweise mit dem vorstehend beschriebenen und in Figur 1 dargestellten Ausführungsbeispiel überein, so dass zur Vermeidung von Wiederholungen auf die vorstehende Beschreibung verwiesen wird.

Eine Besonderheit dieses Ausführungsbeispiels besteht darin, dass der Haftvermittler und die Lackfolie in den Schritten S2 und S3 während des ersten Arbeitsgangs gemeinsam auf die Bauteiloberfläche aufgetragen werden.

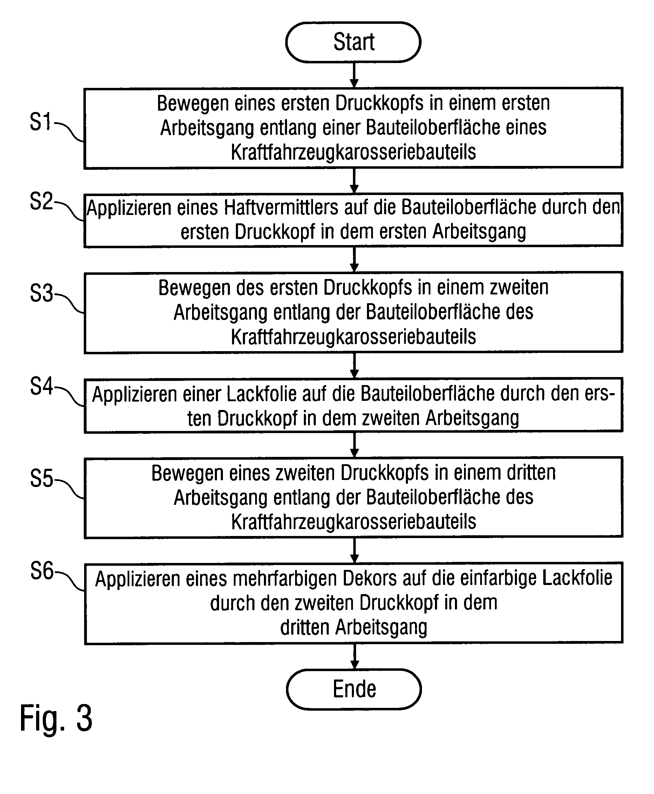

Das Ausführungsbeispiel gemäß Figur 3 stimmt ebenfalls teilweise mit dem vorstehend beschriebenen und in Figur 1 dargestellten Ausführungsbeispiel überein, so dass zur Vermeidung von Wiederholungen auf die vorstehende Beschreibung verwiesen wird.

Eine Besonderheit dieses Ausführungsbeispiels besteht darin, dass zwei verschiedene Druckköpfe verwendet werden, wobei der erste Druckkopf in den Schritten S2 und S4 dazu dient, den Haftvermittler bzw. die Lackfolie aufzusprühen, wohingegen der zweite Druckkopf dazu dient, in dem Schritt S6 das Dekor auf die zuvor aufgebrachte Lackfolie aufzusprühen.

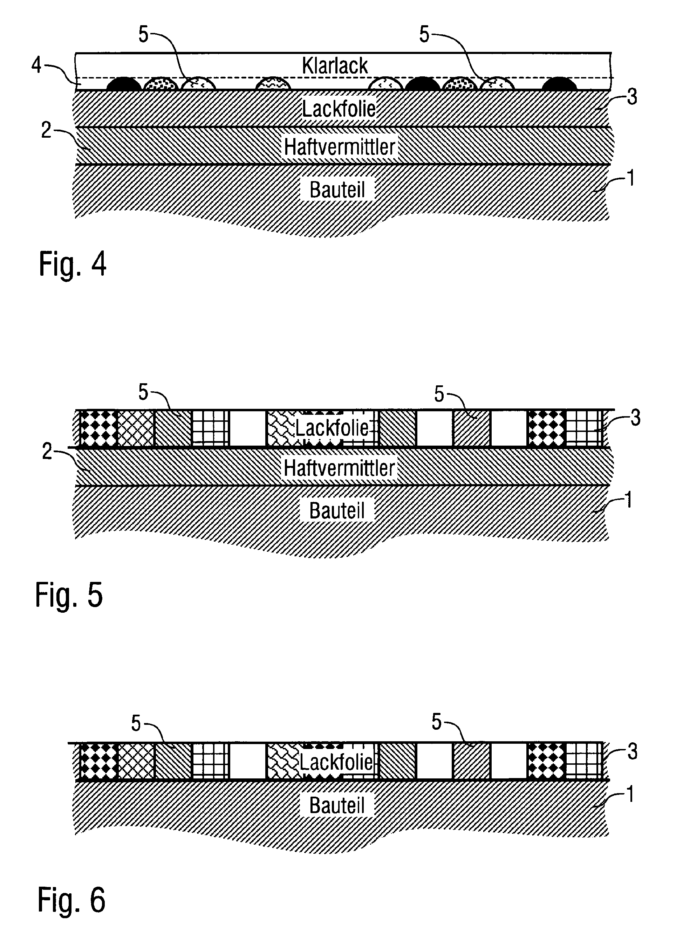

Figur 4 zeigt eine vereinfachte Querschnittsansicht eines erfindungsgemäßen Kraftfahrzeugkarosseriebauteils 1 mit einem Haftvermittler 2, einer als Flüssigfolie realisierten aufgesprühten Lackfolie 3 und einer Dekorschicht 4, die auf die Lackfolie 3 aufgebracht ist. Die Dekorschicht 4 enthält hierbei ein Muster 5, das nur schematisch dargestellt ist. Die Lackfolie 3 ist hierbei also einfarbig oder durchsichtig und dient nur als Untergrund für die Dekorschicht 4. Darüber hinaus ist als oberste Deckschicht eine Klarlackschicht aufgebracht, die wahlweise als Einkomponentenklarlack oder als Zweikomponentenklarlack ausgebildet sein kann.

Figur 5 zeigt eine Abwandlung des Ausführungsbeispiels gemäß Figur 4, so dass zur Vermeidung von Wiederholungen auf die vorstehende Beschreibung zu Figur 4 verwiesen wird.

Eine Besonderheit dieses Ausführungsbeispiels besteht darin, dass die Lackfolie 3 bereits das Muster 5 des Dekors enthält, so dass auf die bei Figur 4 vorgesehene Dekorschicht 4 verzichtet werden kann. Die Lackfolie 3 ist deshalb entsprechend dem gewünschten Dekor mehrfarbig ausgebildet.

Das Ausführungsbeispiel gemäß Figur 6 stimmt teilweise mit dem vorstehend beschriebenen und in Figur 5 dargestellten Ausführungsbeispiel überein, so dass zur Vermeidung von Wiederholungen auf die vorstehende Beschreibung zu Figur 5 verwiesen wird.

Eine Besonderheit dieses Ausführungsbeispiels besteht darin, dass die Lackfolie 3 direkt auf die Bauteiloberfläche des Kraftfahrzeugkarosseriebauteils 1 aufgebracht ist, so dass auf den Haftvermittler 2 gemäß Figur 5 verzichtet werden kann.

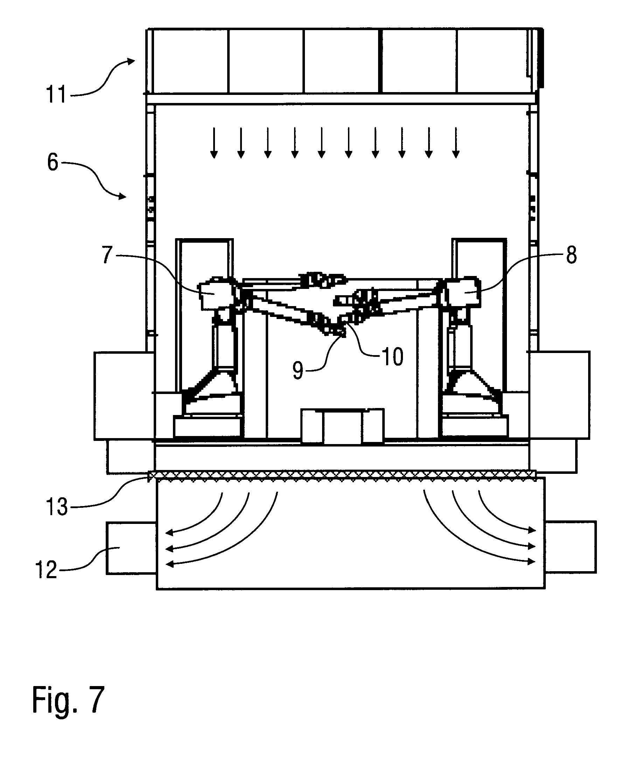

Ferner zeigt Figur 7 eine Querschnittsansicht einer erfindungsgemäßen Beschichtungsanlage, die zum Aufbringen der Lackfolie 3 geeignet ist.

Hierzu sind in einer Lackierkabine 6 mehrere Lackierroboter 7, 8 angeordnet, die als Applikationsgerät jeweils einen Druckkopf 9, 10 führen, wie er beispielsweise in der Patentanmeldung DE 10 2008 053 178.2 beschrieben ist.

Die Druckköpfe 9, 10 weisen jeweils mehrere Düsen zum Applizieren des Haftvermittlers 2, der Lackfolie 3 bzw. des Dekors 4 auf. Alternativ besteht jedoch die Möglichkeit, dass die Lackierroboter 7, 8 zur Applikation des Haftvermittlers 2, der Lackfolie 3 und des Dekors 4 jeweils einen separaten Druckkopf führen.

Über der Lackierkabine 6 befindet sich in herkömmlicher Weise ein sogenanntes Plenum 11, aus dem Luft durch die Decke der Lackierkabine 6 nach unten in Pfeilrichtung in die Lackierkabine 6 eingeleitet wird.

Unter der Lackierkabine 6 befindet sich eine Luftabsaugung 12, welche die Kabinenluft durch eine Filterdecke 13 hindurch nach unten aus der Lackierkabine 6 absaugt. Die Filterdecke 13 filtert hierbei den in der Kabinenluft geringfügig vorhandenen Overspray heraus, ohne dass eine Auswaschung wie bei herkömmlichen Lackieranlagen erforderlich ist.

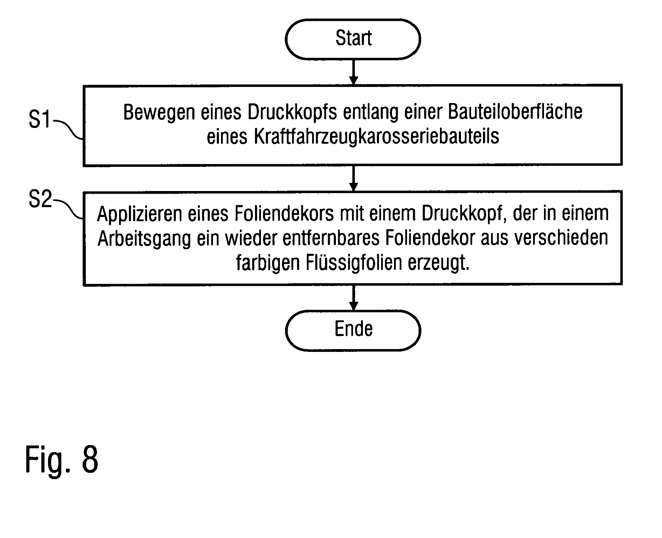

Figur 8 zeigt ein bevorzugtes Ausführungsbeispiel eines erfindungsgemäßen Beschichtungsverfahrens.

Dabei wird in einem ersten Schritt S1 ein Druckkopf entlang einer zu beschichtenden Bauteiloberfläche eines Kraftfahrzeugkarosseriebauteils bewegt.

Während dieser Bewegung appliziert der Druckkopf in einem zweiten Schritt S2 in einem Arbeitsgang ein wieder entfernbares Foliendekor aus verschienfarbigen Flüssigfolien.

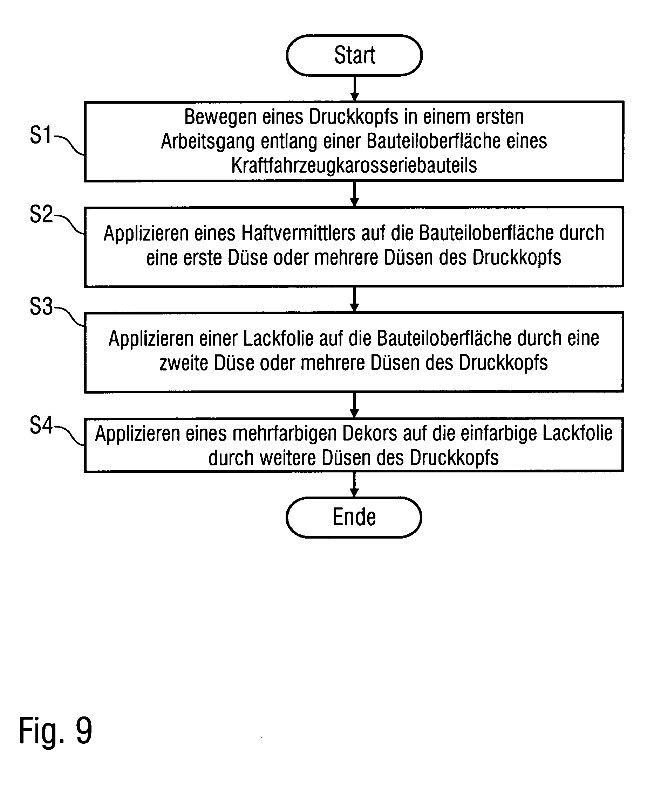

Figur 9 zeigt zeigt eine Abwandlung des Ausführungsbeispiels gemäß Figur 2, so dass zur Vermeidung von Wiederholungen auf die vorstehende Beschreibung zu Figur 2 verwiesen wird.

Eine Besonderheit dieses Ausführungsbeispiels besteht darin, dass auf den Schritt S4 in Figur 2 verzichtet wird. In diesem Ausführungsbeispiel werden der Haftvermittler, die Lackfolie und das Dekor also in einem einzigen Arbeitsgang aufgetragen, wozu jeweils separate Düsen in dem Druckkopf vorgesehen sind. Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand der einzelnen Unteransprüche.

### Bezugszeichenliste:

- 1: Kraftfahrzeugkarosseriebauteil
- 2: Haftvermittler
- 3: Lackfolie
- 4: Dekorschicht
- 5: Muster
- 6: Lackierkabine
- 7: Lackierroboter
- 8: Lackierroboter
- 9: Druckkopf
- 10: Druckkopf
- 11: Plenum
- 12: Luftabsaugung
- 13: Filterdecke

## Patentansprüche

1. Verfahren zur Beschichtung einer Bauteiloberfläche eines Bauteils (1) mit einer zusammenhängenden Lackfolie (3), wobei die Lackfolie (3) wieder von der Bauteiloberfläche abgezogen werden kann, **dadurch gekennzeichnet, dass** die Lackfolie (3) als Flüssigfolie auf die Bauteiloberfläche aufgesprüht wird und die Lackfolie (3) selbst mehrfarbig ist und ein vorgegebenes Dekor (5) wiedergibt.

2. Verfahren nach einem der vorhergehenden Ansprüche, **dadurch gekennzeichnet,**
a) **dass** die Lackfolie aus mehreren übereinander liegenden Flüssigfolien zusammengesetzt wird, und
b) **dass** die einzelnen übereinander liegenden Flüssigfolien unterschiedlich eingefärbt sind.

3. Verfahren nach einem der vorhergehenden Ansprüche, **dadurch gekennzeichnet, dass** vor dem Beschichten der Bauteiloberfläche mit der Lackfolie (3) ein Haftvermittler (2) auf die Bauteiloberfläche aufgetragen wird.

4. Verfahren nach einem der vorhergehenden Ansprüche, **dadurch gekennzeichnet, dass** die Lackfolie (3) und das Dekor (4, 5) mit demselben Applikationsgerät (9, 10) aufgetragen werden.

5. Verfahren nach einem der vorhergehenden Ansprüche, **dadurch gekennzeichnet,**
**dass** die Lackfolie (3) und das Dekor (4, 5) nacheinander mit unterschiedlichen Applikationsgeräten (9, 10) aufgetragen werden.

6. Verfahren nach einem der vorhergehenden Ansprüche, **dadurch gekennzeichnet,**
**dass** die Lackfolie (3) und das Dekor (4, 5) gemeinsam in einem Arbeitsgang mit demselben Applikationsgerät (9, 10) aufgetragen werden, wobei das Applikationsgerät (9, 10) in dem Arbeitsgang entlang der Bauteiloberfläche bewegt wird.

7. Verfahren nach einem der vorhergehenden Ansprüche, **dadurch gekennzeichnet,**
**dass** die Lackfolie (3) und das Dekor (4, 5) nacheinander in verschiedenen Arbeitsgängen aufgetragen werden, wobei in jedem der Arbeitsgänge mindestens ein Applikationsgerät (9, 10) entlang der Bauteiloberfläche bewegt wird.

8. Verfahren nach einem der vorhergehenden Ansprüche, **dadurch gekennzeichnet,**
a) **dass** die Lackfolie (3) maschinell auf die Bauteiloberfläche oder den Haftvermittler (2) aufgebracht wird, und/oder
b) **dass** das Dekor (4, 5) maschinell auf die Lackfolie (3) aufgebracht wird, und
c) die maschinelle Aufbringung mit einem mehrachsigen Beschichtungsroboter (7, 8) erfolgt, der mehrere schwenkbare Roboterarme aufweist und das Applikationsgerät (9, 10) über die Bauteiloberfläche führt.

9. Verfahren nach einem der vorhergehenden Ansprüche, **dadurch gekennzeichnet, dass** die Lackfolie (3) nicht nur auf horizontale Bauteiloberflächen aufgebracht wird, sondern auch auf geneigte Bauteiloberflächen.

10. Verfahren nach einem der vorhergehenden Ansprüche, **dadurch gekennzeichnet, dass** das Verfahren zur Beschichtung eines Kraftfahrzeugkarosseriebauteils dient.

11. Verfahren nach einem der vorhergehenden Ansprüche, **dadurch gekennzeichnet, dass** die Lackfolie (3) nicht nur auf horizontale Bauteiloberflächen aufgebracht wird, sondern auch auf senkrechte Bauteiloberflächen.

12. Bauteil (1), mit einer Bauteiloberfläche und einer auf die Bauteiloberfläche aufgebrachten Lackfolie (3), wobei die Lackfolie (3) wieder von der Bauteiloberfläche abgezogen werden kann, **dadurch gekennzeichnet, dass** die Lackfolie (3) eine aufgesprühte Flüssigfolie ist und die Lackfolie (3) selbst mehrfarbig ist und ein vorgegebenes Dekor (5) wiedergibt.

13. Bauteil (1) nach Anspruch 12, **dadurch gekennzeichnet, dass** zwischen der Lackfolie (3) und der Bauteiloberfläche ein Haftvermittler (2) auf die Bauteiloberfläche aufgebracht ist.

14. Bauteil (1) nach Anspruch 12 oder 13,
**dadurch gekennzeichnet, dass** die Lackfolie aus mehreren übereinander liegenden Flüssigfolien besteht, die unterschiedlich eingefärbt sind.

15. Bauteil (1) nach einem der Ansprüche 12 bis 14, **dadurch gekennzeichnet, dass** das Bauteil (1) ein Kraftfahrzeugkarosseriebauteil ist.

## Claims

1. Method for coating a component surface of a component (1) with a contiguous film of paint (3), wherein the film of paint (3) can be removed again from the component surface, **characterized in that** the film of paint (3) is sprayed onto the component surface as a liquid film and the film of paint (3) itself is multi-coloured and represents predetermined decor (5).

2. Method according to anyone of the preceding claims, **characterized**
a) **in that** the film of paint is composed of several super-imposed liquid films, and
b) **in that** the individual super-imposed liquid films are differently coloured.

3. Method according to anyone of the preceding claims, **characterized in that** prior of the coating onto the component surface with the film of paint (3) an adhesion promoter (2) is applied onto the component surface.

4. Method according to anyone of the preceding claims, **characterized in that** the film of paint (3) and the decor (4, 5) are applied with the same application device (9, 10).

5. Method according to anyone of the preceding claims, **characterized in that**
the film of paint (3) and the decor (4, 5) are applied successively with different application devices (9, 10).

6. Method according to anyone of the preceding claims, **characterized in that**
the film of paint (3) and the decor (4, 5) are applied commonly in one processing step with the same application device (9, 10), wherein the application device (9, 10) is moved along the component surface in the processing step.

7. Method according to anyone of the preceding claims, **characterized in that**
the film of paint (3) and the decor (4, 5) are successively applied in different processing steps, wherein in each of the processing steps at least one application device (9, 10) is moved along the component surface.

8. Method according to anyone of the preceding claims, **characterized in that**
a) the film of paint (3) is applied onto the component surface or the adhesion promoter (2) in a machined manner and/or
b) the decor (4, 5) is applied onto the film of paint (3) in a machined manner, and
c) the application in the machined manner is carried out by a multi-axis coating robot (7, 8), comprising several pivotable robot arms and moving the application device (9, 10) over the component surface.

9. Method according to anyone of the preceding claims, **characterized in that** the film of paint (3) is not only applied onto horizontal component surfaces, but also onto inclined component surfaces.

10. Method according to anyone of the preceding claims, **characterized in that** the method serves for the coating of automotive body components.

11. Method according to anyone of the preceding claims, **characterized in that** the film of paint (3) is not only applied onto horizontal component surfaces, but also onto upright component surfaces.

12. Component (1), comprising a component surface and a film of paint (3) applied onto the component surface, wherein the film of paint (3) is removable again from the component surface, **characterized in that** the film of paint (3) is a sprayed liquid film and the film of paint (3) itself is multi-coloured and represents a predetermined decor (5).

13. Component (1) according to claim 12, **characterized in that** between the film of paint (3) and the component surface an adhesion promoter (2) is applied onto the component surface.

14. Component (1) according to claim 12 or 13, **characterized in that** the film of paint is comprised of several super-imposed liquid films which have different colours.

15. Component (1) according to anyone of claims 12 to 14, **characterized in that** the component (1) is an automotive body component.

## Revendications

1. Procédé visant à recouvrir une surface de composant d'un composant (1) avec un film de peinture continu (3), dans lequel le film de peinture (3) peut à nouveau être enlevé de la surface du composant, **caractérisé en ce que** le film de peinture (3) est pulvérisé en tant que film liquide sur la surface du composant et le film de peinture (3) lui-même est multicolore et reproduit un motif prédéfini (5).

2. Procédé selon la revendication précédente,
**caractérisé**
a) **en ce que** le film de peinture est composé à partir de plusieurs films liquides reposant l'un par-dessus l'autre, et
b) **en ce que** les films liquides individuels reposant l'un par-dessus l'autre sont teintés dans des couleurs différentes.

3. Procédé selon l'une des revendications précédentes,
**caractérisé en ce qu'**avant le recouvrement de la surface du composant avec le film de peinture (3), un agent d'accrochage (2) est appliqué sur la surface du composant.

4. Procédé selon l'une des revendications précédentes,
**caractérisé en ce que** le film de peinture (3) et le motif (4, 5) sont appliqués avec le même appareil d'application (9, 10).

5. Procédé selon l'une des revendications précédentes,
**caractérisé en ce que** le film de peinture (3) et le motif (4, 5) sont appliqués l'un après l'autre avec des appareils d'application (9, 10) différents.

6. Procédé selon l'une des revendications précédentes,
**caractérisé en ce que** le film de peinture (3) et le motif (4, 5) sont appliqués conjointement dans une seule opération avec le même appareil d'application (9, 10), l'appareil d'application (9, 10) étant déplacé le long de la surface du composant au cours de l'opération.

7. Procédé selon l'une des revendications précédentes,
**caractérisé en ce que** le film de peinture (3) et le motif (4, 5) sont appliqués l'un après l'autre dans des opérations différentes, au moins un appareil d'application (9, 10) étant déplacé le long de la surface du composant au cours de chacune des opérations.

8. Procédé selon l'une des revendications précédentes,
**caractérisé**
a) **en ce que** le film de peinture (3) est appliqué de façon mécanique sur la surface du composant ou sur l'agent d'accrochage (2), et/ou
b) **en ce que** le motif (4, 5) est appliqué de façon mécanique sur le film de peinture (3), et
c) **en ce que** l'application mécanique est réalisée avec un robot de recouvrement à axes multiples (7, 8), qui présente plusieurs bras de robot pivotants et guide l'appareil d'application (9, 10) sur la surface du composant.

9. Procédé selon l'une des revendications précédentes,
**caractérisé en ce que** le film de peinture (3) n'est pas seulement appliqué sur des surfaces horizontales du composant, mais aussi sur des surfaces inclinées du composant.

10. Procédé selon l'une des revendications précédentes,
**caractérisé en ce que** le procédé sert au recouvrement d'un composant de carrosserie d'un véhicule automobile.

11. Procédé selon l'une des revendications précédentes,
**caractérisé en ce que** le film de peinture (3) n'est pas seulement appliqué sur des surfaces horizontales du composant, mais aussi sur des surfaces verticales du composant.

12. Composant (1) ayant une surface de composant et un film de peinture (3) appliqué sur la surface du composant, le film de peinture (3) pouvant à nouveau être enlevé de la surface du composant, **caractérisé en ce que** le film de peinture (3) est un film liquide pulvérisé et **en ce que** le film de peinture (3) lui-même est multicolore et reproduit un motif prédéfini (5).

13. Composant (1) selon la revendication 12, **caractérisé en ce qu'**un agent d'accrochage (2) est appliqué sur la surface du composant entre le film de peinture (3) et la surface du composant.

14. Composant (1) selon la revendication 12 ou 13,
**caractérisé en ce que** le film de peinture est composé à partir de plusieurs films liquides reposant l'un par-dessus l'autre, qui sont teintés dans des couleurs différentes.

15. Composant (1) selon l'une des revendications 12 à 14, **caractérisé en ce que** le composant (1) est un composant de carrosserie d'un véhicule automobile.
